Europäisches Patentamt

European Patent Office

Office européen des brevets

(11) Veröffentlichungsnummer: **0 285 221 B1**

(12) **EUROPÄISCHE PATENTSCHRIFT**

(45) Veröffentlichungstag der Patentschrift: **08.12.93**

(21) Anmeldenummer: **88200597.8**

(22) Anmeldetag: **30.03.88**

(51) Int. Cl.⁵: **G10L 5/06**

(54) **Verfahren zum Erkennen kontinuierlich gesprochener Wörter.**

(30) Priorität: **03.04.87 DE 3711348**

(43) Veröffentlichungstag der Anmeldung:
**05.10.88 Patentblatt 88/40**

(45) Bekanntmachung des Hinweises auf die
Patenterteilung:
**08.12.93 Patentblatt 93/49**

(84) Benannte Vertragsstaaten:
**DE FR GB**

(56) Entgegenhaltungen:

PROCEEDINGS OF THE SECOND INTERNA-
TIONAL JOINT CONFERENCE ON PATTERN
RECOGNITION, Copenhagen, 13. - 15. August
1974, Band 2, Seiten 249-250, IEEE, Washington, US; G.R. DOWLING et al.: "Elastic template matching in speech recognition, using
linguistic information"

ICASSP 87, 1987, INTERNATIONAL CONFE-
RENCE ON ACOUSTICS, SPEECH, AND SI-
GNAL PROCESSING, Dallas, 6. - 9. April 1987,
Band 1, Seiten 3.2.1.-3.2.4., IEEE, New York,
US; H. NEY: "Dynamic programming speech
recognition using a context-free grammar"

(73) Patentinhaber: **Philips Patentverwaltung
GmbH
Wendenstrasse 35c
D-20097 Hamburg(DE)**

(84) Benannte Vertragsstaaten:
**DE**

(73) Patentinhaber: **N.V. Philips' Gloeilampenfabrieken
Groenewoudseweg 1
NL-5621 BA Eindhoven(NL)**

(84) Benannte Vertragsstaaten:
**FR GB**

(72) Erfinder: **Ney, Hermann, Dr.
Halstenbeker Weg 65
D-2000 Hamburg 54(DE)**

(74) Vertreter: **Poddig, Dieter, Dipl.-Ing. et al
Philips Patentverwaltung GmbH
Wendenstrasse 35c
D-20097 Hamburg (DE)**

Rank Xerox (UK) Business Services
(3. 10 / 3.6 / 3.3. 1)

## Beschreibung

Die Erfindung betrifft ein Verfahren zur Erkennung eines aus zusammenhängend gesprochenen Wörtern abgeleiteten Sprachsignals, das aus einer zeitlichen Folge von Sprachwerten besteht, von denen jeder einen Abschnitt des Sprachsignals angibt, wobei die Sprachwerte mit vorgegebenen gespeicherten Vergleichswerten verglichen werden, von denen jeweils eine Gruppe von Vergleichswerten ein Wort eines vorgegebenen Vokabulars darstellt und die Vergleichsergebnisse über verschiedene Folgen von Kombinationen von Vergleichswerten und Sprachwerten zu je Folge einer Abstandssumme aufsummiert werden.

Ein derartiges Verfahren ist bekannt aus der DE-OS 32 15 868 und aus der Zeitschrift "IEEE Transactions on Acoustics, Speech, and Signal Processing", Vol. Assp-32, No. 2, April 1984, Seiten 263 bis 271. Dabei werden also ständig eine größere Anzahl verschiedener Folgen von Vergleichswerten und damit von Wörtern verfolgt, da es möglich ist, daß eine Folge, die vorübergehend nicht die kleinste Abstandssumme aufweist, sich beim Vergleich der weiteren Sprachwerte schließlich doch als am besten passend erweist. Als Sprachwerte wurden bei den bekannten Verfahren überwiegend Abtastwerte des Sprachsignals verwendet, die in 10 ms Abstand gewonnen und in ihre Spektralwerte zerlegt wurden. Es können jedoch auch andere Maßnahmen zur Aufbereitung der Sprachabtastsignale verwendet werden, ebenso können die Sprachwerte auch aus mehreren Abtastwerten gewonnen werden und beispielsweise Diphone oder Phoneme oder noch größere Einheiten darstellen, was das Verfahren nicht grundsätzlich ändert.

In der zweiten der vorstehend genannten Druckschriften ist angegeben, daß es zweckmäßig ist, syntaktische Einschränkungen insbesondere bei einem großen Vokabular vorzusehen, um die Erkennungssicherheit und Zuverlässigkeit zu erhöhen. Diese Einschränkungen werden jeweils an den Wortübergängen wirksam, und sie bestehen im wesentlichen darin, daß ein Sprachmodell in Form eines Netzwerkes berücksichtigt wird, d.h. im Sinne der formalen Sprachen eine reguläre Grammatik. Ein solches Sprachmodell ist jedoch relativ starr und unflexibel und führt dazu, daß nur in bestimmter Weise aufgebaute Sätze erkannt werden können, wenn nicht die Zahl der vorgesehenen Möglichkeiten für Satzaufbauten in dem Sprachmodell unpraktikable große Werte annehmen soll.

Aus der Theorie der formalen Sprachen ist eine weitere Klasse, nämlich die kontext-freie Grammatik bekannt, die flexibler ist und die Struktur realer gesprochener Sätze besser erfassen kann.

Aufgabe der vorliegenden Erfindung ist es, ein Verfahren der eingangs genannten Art anzugeben, das bei der Erkennung Einschränkungen eines Sprachmodells im Sinne einer kontext-freien Grammatik berücksichtigt.

Diese Aufgabe wird erfindungsgemäß dadurch gelöst, daß daß bei jedem neuen Sprachwert für jedes Wort die Abstandssumme von Folgen, die je Wort zu verschiedenen früheren Sprachwerten als Anfangspunkt beginnend das ganze Wort bis zum momentanen Sprachwert durchlaufen und bezogen auf den jeweiligen Anfangspunkt minimal sind, bestimmt und in einem ersten Speicher gespeichert wird, daß danach gemäß einer in einer ersten fest gespeicherten Liste enthaltenen Zuordnung der Wörter des Vokabulars zu je Wort mindestens einer syntaktischen Kategorie für jede Kategorie die kleinste Abstandssumme aller dieser Kategorie zugeordneten Wörter im ersten Speicher zusammen mit einer Angabe über die Zuordnung des diese kleinste Abstandssumme ergebenden Wortes in einem zweiten Speicher gespeichert wird, und daß danach gemäß einer zweiten fest gespeicherten Liste geprüft wird, ob und gegebenenfalls in welche zwei weitere syntaktische Kategorien jede Kategorie aufteilbar ist, und bei jedem Feststellen einer Aufteilbarkeit erneut für jeden Anfangspunkt bis zum frühesten Sprachsignal die für die eine der beiden weiteren Kategorien für den jeweiligen Anfangspunkt und einen Zwischenpunkt gespeicherte Abstandssumme und die für die andere der beiden weiteren Kategorien für den Zwischenpunkt und den momentanen Sprachwert gespeicherte Abstandssumme, wobei der Zwischenpunkt nacheinander an benachbarten Stellen zwischen Anfangspunkt und momentanem Sprachwert angenommen wird, zusammen addiert und die Summe mit der Abstandssumme der aufgeteilten Kategorie verglichen und, falls diese größer als die addierten Abstandssummen ist, an deren Stelle zusammen mit einer Angabe über die Aufteilung und den Zwischenpunkt, der die kleinste Summe ergeben hat, gespeichert wird, und daß nach Verarbeitung des letzten Sprachwertes aus der einen ganzen Satz angebenden Kategorie über die darin an der Speicherstelle für den ersten Sprachwert als Anfangspunkt angegebene Aufteilung in weitere Kategorien sowie über die an den jeweils weiteren Kategorien angegebenen Aufteilungen eine Folge von Wörtern als erkannte gesprochene Wörter bestimmt und ausgegeben wird.

Die Erkennung wird also quasi auf zwei Ebenen durchgeführt, und zwar zum einen auf der Ebene der einzelnen Wörter und zum anderen auf der Ebene der syntaktischen Kategorien, die Zusammenhänge zwischen Wörtern angeben. Auf diese Weise wird nicht unmittelbar die die kleinste Gesamt-Abstandssumme ergebende Folge von Wörtern erkannt, sondern eine solche Folge von Wörtern, die den syntaktischen Einschränkungen in Form der syntaktischen Kategorien entsprechen und unter dieser Einschränkung die kleinste Gesamt-Abstandssumme ergeben. Dadurch wird die Erkennung zusammenhängend gesprochener Wörter wesentlich zuverlässiger.

Bei der Bestimmung der Abstandssumme für die Folgen können diese Folgen grundsätzlich beliebig weit zurückverfolgt werden, d.h. der Anfangspunkt kann im äußersten Fall am Beginn der Folge der Sprachwerte liegen. Da jedoch praktisch die Länge der einzelnen Wörter begrenzt und wesentlich kürzer als der gesamte zu erkennende Satz ist, ist es zweckmäßig, daß zur Bestimmung der Abstandssummen die Anfangspunkte der Folgen höchstens die doppelte Länge des längsten Wortes des Vokabulars vom momentanen Sprachwert aus zurückliegen. Auf diese Weise wird der Rechenaufwand und der Speicheraufwand begrenzt, denn der erste Speicher hat dadurch eine begrenzte Länge, lediglich die erforderliche Kapazität des zweiten Speichers hängt ab von der Länge des zu erkennenden Sprachsignals.

Eine Anordnung zur Durchführung des erfindungsgemäßen Verfahrens ist in den weiteren Unteransprüchen gekennzeichnet.

Ausführungsbeispiele der Erfindung werden nachstehend anhand der Zeichnung erläutert. Es zeigen:

Fig. 1   anhand eines Diagramms den gesamten Ablauf eines erfindungsgemäßen Verfahrens,

Fig. 2   ein Beispiel für eine Anzahl Folgen in einem Wort, für die jeweils eine Abstandssumme gewonnen wird,

Fig. 3   schematisch den Inhalt des ersten Speichers,

Fig. 4   schematisch den Inhalt der ersten Liste,

Fig. 5   schematisch den Inhalt des zweiten Speichers und

Fig. 6   schematisch den Inhalt der zweiten Liste,

Fig. 7   die Aufteilung einer syntaktischen Kategorie auf zwei weitere,

Fig. 8   ein schematisches Blockschaltbild einer Anordnung zur Durchführung des Verfahrens.

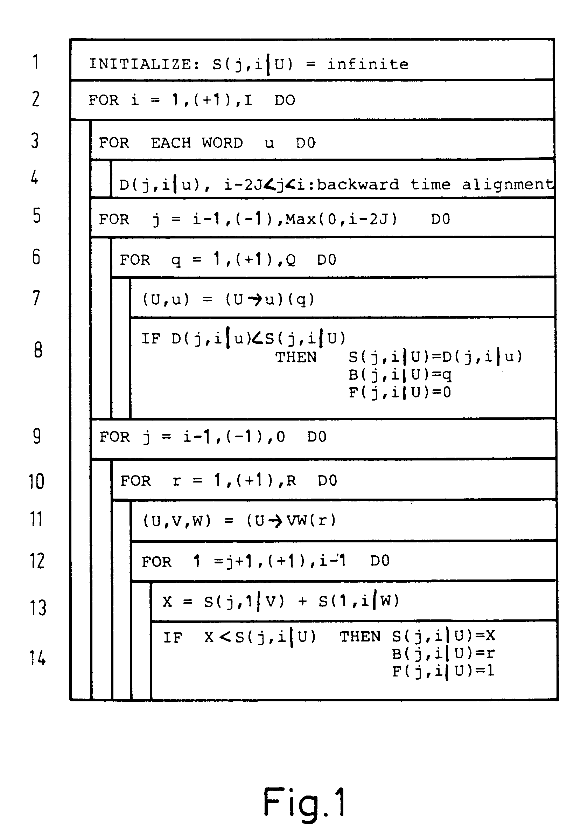

Der durch das Diagramm in Fig. 1 dargestellte Ablauf des erfindungsgemäßen Verfahrens beginnt beim Schritt 1 damit, daß eine Anzahl Werte S(j,i|U) auf einen maximalen Wert entsprechend dem verwendeten Zahlenbereich gesetzt werden. Es sind dies die Werte des zweiten Speichers, wie später erläutert wird.

Der Schritt 2 sagt lediglich, daß die danach folgenden Schritte für jeden neuen Sprachwert i, beginnend vom ersten bis zum letzten Sprachwert I, ausgeführt werden sollen, d.h. sie wiederholen sich zyklisch für jeden neuen Sprachwert. Ein Sprachwert kann dabei das Spektrum eines Abschnitts von 10 ms Dauer des Sprachsignals angeben, es kann aber auch ein aus mehreren derartigen Abschnitten des Sprachsignals abgeleiteter Wert sein, der beispielsweise ein Diphon oder ein Phonem angibt. Der genaue Aufbau des Sprachwertes spielt für die weitere Beschreibung keine Rolle, es müssen lediglich die Vergleichswerte der Wörter des Vokabulars in gleicher Weise erzeugt bzw. von Mustersprachsignalen abgeleitet sein.

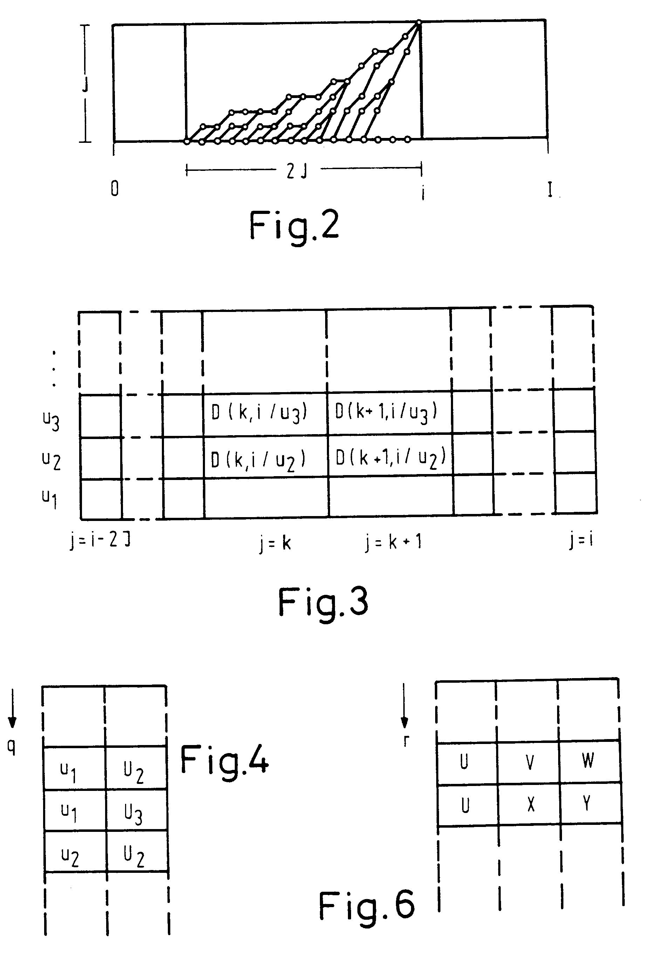

Der Schritt 3 sagt wiederum lediglich, daß der folgende Schritt 4 für jedes Wort des Vokabulars, das hier allgemein mit u bezeichnet ist, durchgeführt wird. Im Schritt 4 werden nun Abstandssummen D(j,i|u) für verschiedene Folgen durch das Wort bestimmt, wobei ein Beispiel für derartige Folgen anhand Fig. 2 erläutert werden soll. Die Bestimmung der Abstandssummen der einzelnen Folgen erfolgt dabei auf grundsätzlich ähnliche Weise, wie in der bereits genannten DE-OS 32 15 868 angegeben ist, lediglich hier in umgekehrter Richtung.

In der Fig. 2 entspricht die eine Richtung der Folge der einzelnen Sprachwerte i, die von 0 bis I gehen. Die senkrechte Richtung entspricht der Folge der Vergleichswerte eines beliebigen Wortes, wobei hier angenommen ist, daß dieses Wort J Vergleichswerte umfaßt. Die Folgen, deren Abstandssummen hier berechnet werden sollen, sollen frühestens bei dem Punkt i-2J beginnen, wenn i der momentane Sprachwert ist, d.h. es wird angenommen, daß im Sprachsignal das Wort höchstens doppelt so langsam gesprochen wird wie das Wort im Vokabular. Dabei müssen also 2J Sprachwerte des längsten Wortes des Vokabulars zwischengespeichert werden. Grundsätzlich ist der Aufbau der Folgen auch von links nach rechts möglich, indem ausgehend von jedem Sprachsignal und dem ersten Vergleichswert die minimalen Abstandssummen der Folgen bestimmt werden, die jedoch dann anstelle der Sprachsignale zwischengespeichert werden müssen. Für das Prinzip des zu beschreibenden Verfahrens ist dies jedoch nicht von Bedeutung, so daß der Aufbau der Folgen nach rückwärts näher erläutert wird.

Zunächst wird also der momentane Sprachwert i mit dem letzten Vergleichswert des Wortes verglichen und der Abstand zwischen beiden ermittelt. Danach wird der vorhergehende Sprachwert mit dem letzten und den vorhergehenden Vergleichswerten des Wortes verglichen und die Abstände werden um den ersten Abstand, gegebenenfalls außerdem um einen festen abstandsabhängigen Wert, erhöht. Dabei entstehen zunächst ausgehend vom Anfangspunkt noch weitere, nicht dargestellte Folgen, im Grenzfall auch eine zunächst waagerecht verlaufende und eine zunächst senkrecht verlaufende Folge, von denen hier jedoch angenommen wird, daß sie im weiteren Verlauf größere Abstandssummen ergeben, so daß sie nicht weiter berücksichtigt werden. Zunächst werden jedoch eine Anzahl Folgen weiterverfolgt, indem jeweils ein vorhergehender Sprachwert mit einer Anzahl Vergleichswerte verglichen und der dabei entstehende Abstand zur jeweils kleinsten vorhergehenden Abstandssumme hinzuaddiert wird. Auf diese Weise gelangen nach und nach alle Folgen zum unteren Rand, d.h. zum ersten Vergleichswert, jedoch wird für jeden unteren Punkt der Linie, der in der natürlichen Zeitfolge der Sprachwerte einen Anfangspunkt einer Folge darstellt, jeweils nur die Folge berücksichtigt, die die kleinste Abstandssumme aufweist. Die einzelnen Anfangspunkte erhalten dabei den Index j. Auf diese Weise ergibt sich bei einem bestimmten Sprachwert i für jeden Wert j und jedes Wort u eine Abstandssumme, die in einem ersten Speicher abgespeichert wird, dessen Inhalt also den in Fig. 3 dargestellten Aufbau hat. In der waagerechten Richtung sind die Anfangspunkte j und in der senkrechten Richtung die Wörter u1, u2, u3... des Vokabulars aufgetragen. In den Feldern der allgemein angenommenen Anfangspunkte $j = k$ und $j = k + 1$ sind die für die Wörter u2 und u3 ermittelten Abstandssummen $D(k,i|u_3)$ usw. angegeben. Die übrigen Felder sind in entsprechender Weise gefüllt.

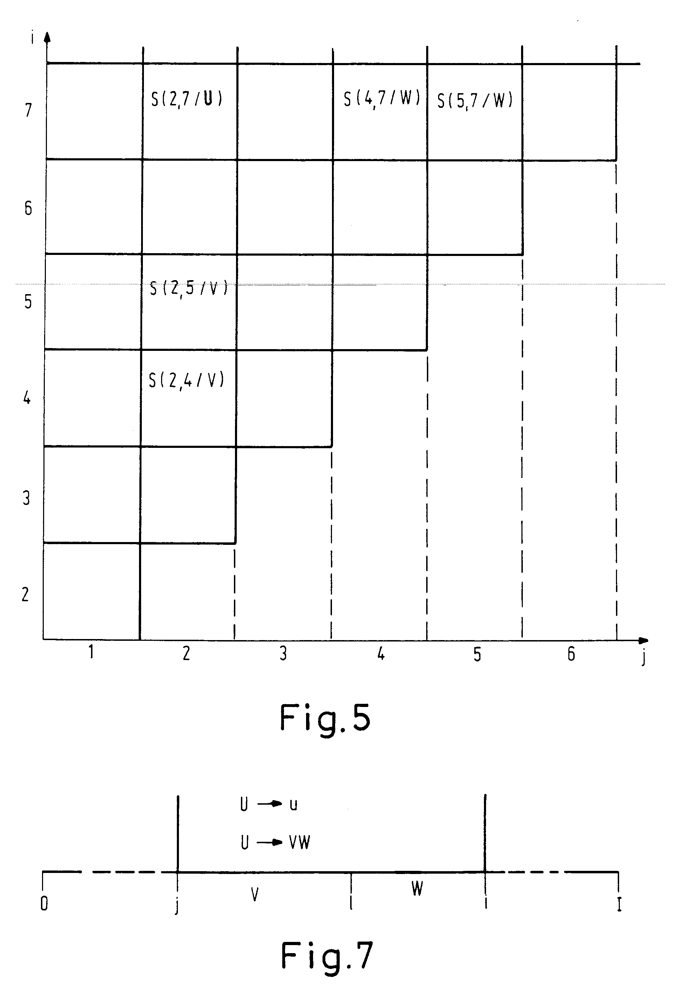

Nachdem auf diese Weise der erste Speicher gemäß Fig. 3 mit den Abstandssummen gefüllt ist, werden gemäß Schritt 5 für jeden der Anfangspunkte j, beginnend vom Anfangspunkt unmittelbar vor dem momentanen Sprachwert, die Schritte 6 bis 8 durchgeführt. Im Schritt 6 wird eine Liste, von der ein Ausschnitt in Fig. 4 angedeutet ist, Zeile für Zeile q abgefragt, wobei diese Liste die Zuordnung eines Wortes, gemäß Fig. 4 beispielsweise des Wortes $u_1$ zu einer syntaktischen Kategorie U, angibt, beispielsweise zu den Kategorien $U_2$ und $U_3$, wie in Fig. 4 angegeben ist. Bestimmte Wörter können beispielsweise auch nur einer Kategorie oder mehr als zwei Kategorien zugeordnet sein, während jede Kategorie umgekehrt meistens mehreren Wörtern zugeordnet ist. Jede Zuordnung wird gemäß Schritt 7 zwischengespeichert, und im Schritt 8 wird die Abstandssumme $D(j,i|u)$ des Wortes u für die Folge vom Anfangspunkt j bis zum Endpunkt i mit einem bereits anfangs erwähnten Wert $S(j,i|U)$ der zugeordneten Kategorie U verglichen, der in einem zweiten Speicher enthalten ist, dessen inhaltlicher Aufbau in Fig. 5 angedeutet ist.

Für jedes Wertepaar i und j, wobei j kleiner ist als i, ist ein Speicherplatz vorhanden, der außer dem Wert S noch zwei weitere Werte B und F aufnimmt, wie in Fig. 1 im Schritt 8 angegeben ist.

Aufgrund der Einschränkung, daß j kleiner ist als i, ergibt sich eine Matrix, die unterhalb der Diagonalen keine Werte enthält. Die Größe dieser Matrix hängt ab von der Länge des zu erkennenden Satzes, d.h. von der Anzahl der Sprachwerte i. Die in Fig. 5 dargestellte Matrix ist nun für jede syntaktische Kategorie vorhanden, die in der Liste gemäß Fig. 4 auftritt, d.h., daß der gesamte zweite Speicher als eine dreidimensionale Matrix aus übereinander gestapelten zweidimensionalen Matrizen gemäß Fig. 5 betrachtet werden kann, so daß also zu jedem Sprachwert i eine zur Zeichenebene der Fig. 5 senkrechte Ebene mit Speicherplätzen für die einzelnen Anfangspunkte j und die möglichen Kategorien U vorhanden ist. Da der Schritt 8 in Fig. 1 für jeweils einen Sprachwert i und einen Anfangspunkt j für alle Zuordnungen durchgeführt wird, wobei die Abstandssumme $D(j,i|u)$ eines Wortes aus dem ersten Speicher und die weiteren Worte bei der entsprechenden Kategorie des zweiten Speichers eingetragen werden, wenn diese Abstandssumme kleiner ist als die an der betreffenden Stelle $S(j,i|U)$ schon vorhandene, wird also jeweils eine Spalte des ersten Speichers gemäß Fig. 3 auf eine senkrechte Säule des zweiten Speichers gemäß der Zuordnung in Fig. 4 abgebildet, und dies aufeinanderfolgend für alle Anfangspunkte j. Da auf diese Weise bei jedem Sprachwert i der wesentliche Inhalt des ersten Speichers gemäß Fig. 3, nämlich die kleinste Abstandssumme der Wörter einer Kategorie zusammen mit der Angabe des dieses Minimum liefernden Wortes über die Zeile q der Zuordnungsliste gemäß Fig. 4 in den zweiten Speicher abgebildet ist, kann mit dem nächsten Sprachwert i der erste Speicher gemäß Fig. 3 wieder gelöscht bzw. überschrieben werden.

Der zweite Speicher gemäß Fig. 5 wird also nacheinander zeilenweise bzw. genauer ebenenweise gefüllt, wobei die beim Schritt 1 ursprünglich eingeschriebenen maximalen Werte jeweils überschrieben werden. Da die Größe des ersten Speichers jedoch in der einen Dimension auf 2J beschränkt ist, wobei J die Länge des längsten Wortes des Vokabulars ist, bleiben allerdings bei späteren Sprachwerten i in zunehmend größeren Bereichen auf der linken Seite der senkrechten Ebenen in den Speicherplätzen die ursprünglich eingeschriebenen maximalen Anfangswerte erhalten. Die übrigen Speicherplätze enthalten eine Angabe bzw. eine Bewertung, wie gut ein Sprachabschnitt zwischen einem Endwert i und einem Anfangswert j zu einer vorgegebenen syntaktischen Kategorie paßt sowie die Angabe, welches Wort innerhalb dieser Kategorie die beste Übereinstimmung zeigt.

Das übergeordnete Ziel ist jedoch, die Folge von Wörtern zu finden, die sowohl in das Sprachmodell, das durch die Liste gemäß Fig. 4 sowie eine weitere, in Fig. 6 dargestellte Liste festgelegt ist, paßt und deren Gesamt-Abstandssumme außerdem ein Minimum gegenüber anderen Wortfolgen ist, die ebenfalls in das Sprachmodell passen. Dafür müssen nun die Zusammenhänge der syntaktischen Kategorien untereinander berücksichtigt werden. Dies geschieht gemäß Fig. 7 dadurch, daß nicht nur Zuordnungen zwischen syntaktischen Kategorien und Wörtern vorgegeben werden, sondern es wird auch zugelassen, daß eine Kategorie in die unmittelbare Aufeinanderfolge zweier weiterer Kategorien aufteilbar ist. So ist in Fig. 7 angenommen, daß der Sprachabschnitt von j bis i als am besten passend zu einem Wort der Kategorie U festgestellt wurde. Dies kann eine Kategorie sein, die andererseits außerdem der Folge von zwei weiteren Kategorien V und W zugeordnet werden kann, d.h. die Kategorie U kann auch eine zusammengesetzte Kategorie sein. Für diese Aufteilung muß die Grenze l bestimmt werden, für die der Sprachabschnitt j bis i am besten durch die Kombination der beiden Kategorien V und W erklärt werden kann. An dieser Stelle sei bemerkt, daß eine oder auch beide dieser Kategorien V und W wiederum weiteren Kombinationen von Kategorien oder direkt Wörtern des Vokabulars zugeordnet werden können.

Zum Bestimmen der optimalen Grenze l zwischen den beiden Kategorien V und W wird angenommen, daß die Summe der Abstandssummen der beiden Kategorien ein Minimum ergeben soll. Dafür muß die Summe der Abstandssummen der beiden Kategorien für verschiedene Werte der Grenze l zwischen j und i bestimmt werden. Dies erfolgt nun durch die Schritte 9 bis 14 des Diagramms in Fig. 1.

Der Schritt 9 gibt an, daß die folgenden Schritte jeweils für einen bestimmten Anfangspunkt j, d.h. für einen bestimmten Sprachabschnitt durchgeführt werden, wobei j aber nun bis zum Anfang j = 0 verfolgt wird. Innerhalb jedes solchen Sprachabschnitts wird im Schritt 10 eine Liste durchlaufen, von der in Fig. 6 ein Abschnitt dargestellt ist und die angibt, welche syntaktische Kategorien in welche weiteren Kategorien in bestimmter Reihenfolge aufgeteilt werden können. Beispielsweise kann die Kategorie U in die Kategorien V und W oder in die Kategorien X und Y aufgeteilt werden, und jede Aufteilung wird getrennt für verschiedene Werte der Grenze l untersucht.

Im Schritt 11 wird für jede so gefundene Aufteilung die Zeile r der Liste in Fig. 6 und die sich über die Aufteilung ergebenden weiteren Kategorien festgehalten. Für eine jede solche Aufteilung werden für verschiedene Werte der Grenze l zwischen Anfangspunkt j und Endpunkt i des betrachteten Sprachsignals gemäß Schritt 13 die Abstandssummen der Kategorien S(j,l|V) + S(l,i|W) für die entsprechenden Teilabschnitte j bis l und l bis i ermittelt, und zwar aus dem zweiten Speicher, wie in Fig. 5 angegeben ist. Die in Fig. 5 in den fünf Feldern angegebenen Werte stellen ein Beispiel dafür dar, und zwar wird ein Sprachabschnitt zwischen dem Anfangspunkt j = 2 und dem Endpunkt i = 7 betrachtet, von dem zunächst angenommen wird, daß er durch die syntaktische Kategorie U erklärt werden kann, wobei die Kategorie U wiederum der Kombination der Kategorien V und W zugeordnet werden kann. Wenn die Grenze l = 4 angenommen wird, müssen die Werte S(2,4|V) und S(4,7|W) aus dem Speicher 5 ausgelesen werden. Die Lage dieser Werte ist in Fig. 5 angegeben, wobei jedoch zu berücksichtigen ist, daß diese Werte in verschiedenen Ebenen der in Fig. 5 nur zweidimensional angedeuteten tatsächlich dreidimensionalen Matrix liegen. Aus dieser Lage ist jedoch zu erkennen, daß diese Werte bereits früher berechnet wurden und tatsächlich vorhanden sind, da die Matrix in Fig. 5 mit steigendem Wert i gefüllt wird, wie vorher beschrieben wurde. In entsprechender Weise sind die in Fig. 5 angegebenen erforderlichen Werte für eine Grenze l = 5 vorhanden, usw.

Als nächstes wird im Schritt 13 aus den für eine bestimmte Grenze l ausgelesenen Werten die Summme x = S(j,l|V) + S(l,i|W) gebildet, und im Schritt 14 wird geprüft, ob diese Summe x < S(j,i|U) ist, d.h. kleiner als der im Beispiel nach Fig. 5 für den Wert S(2,7|U) vorhandene Wert. Dieser Wert ist zunächst an den Stellen in der Matrix mit j < i-2J (mit J gleich der Länge des längsten Worts des Vokabulars) noch der Anfangswert, der im Schritt 1 auf den maximal darstellbaren Wert gesetzt wurde. Wenn diese Summenbildung und Vergleich nacheinander für alle möglichen Werte der Grenze l durchgeführt worden sind, ist der Wert S(j,i|U) das Minimum der dabei ermittelten Summen, und außerdem ist an dieser Stelle der Matrix in Fig. 5 die Nummer der Zeile der Liste in Fig. 6 gespeichert, die die Zuordnung der Kategorien zu jeweils zwei anderen Kategorien enthält, und außerdem wird der Wert der Grenze l zwischen den beiden weiteren Kategorien gespeichert. Dies ist notwendig, um am Schluß der Verarbeitung aller Sprachwerte den optimalen Weg durch eine Kette von Wörtern zurückverfolgen zu können.

Dieses Zurückverfolgen beginnt, wenn alle Sprachwerte i bis zum letzten Sprachwert I verarbeitet sind, wobei dieser letzte Sprachwert vorgegeben oder beispielsweise durch eine Erkennung einer längeren Sprachpause bestimmt wird. Es wird davon ausgegangen, daß eine der syntaktischen Kategorien den gesamten Satz beschreibt, und diese sei zur Verdeutlichung mit G bezeichnet. Es wird nun also im zweiten Speicher am Speicherplatz O,I|G der Wert B(O,I|G) ausgelesen, der die Zeile der Liste in Fig. 6 angibt, die diejenige Aufteilung der Kategorie G in zwei andere Kategorien angibt, die aufgrund der vorhergehenden Optimierung die kleinste Gesamt-Abstandssumme ergibt. Außerdem wird aus dem zugehörigen Wert F-(0,l|G) entnommen, wo die Grenze zwischen diesen beiden weiteren Kategorien liegt. Die beiden Kategorien, die hier beispielsweise mit M und N angenommen werden, und deren Grenze, deren Wert hier k sein möge, werden zwischengespeichert, und dann wird die erste Kategorie M weiterverfolgt. Dazu wird aus dem zweiten Speicher der Wert B-(0,k|M), der die für den erkannten Satz optimale Aufteilung der Kategorie M in zwei weitere Kategorien angibt, und über den Wert F(O,k|M) die zugehörige Grenze zwischen beiden weiteren Kategorien ausgelesen und zwischengespeichert. Dieser Vorgang wird jeweils fortgesetzt, bis eine Kategorie auftritt, für die der zugehörige Wert F Null ist. Dies bedeutet, daß diese letztgefundene Kategorie einem bestimmten Wort zugeordnet ist, wobei diese Zuordnung durch den zugehörigen Wert B angegeben wird. Dies ist dann das erste Wort des Satzes. Anschließend wird wieder zurückgegangen und die zweite Kategorie der letzten Aufspaltung weiterverfolgt. Auf diese Weise werden also nach und nach alle Wörter der optimalen Kette aufgesucht und ausgegeben. Damit ist dann die Erkennung des Satzes aus den zusammenhängend gesprochenen Wörtern abgeschlossen.

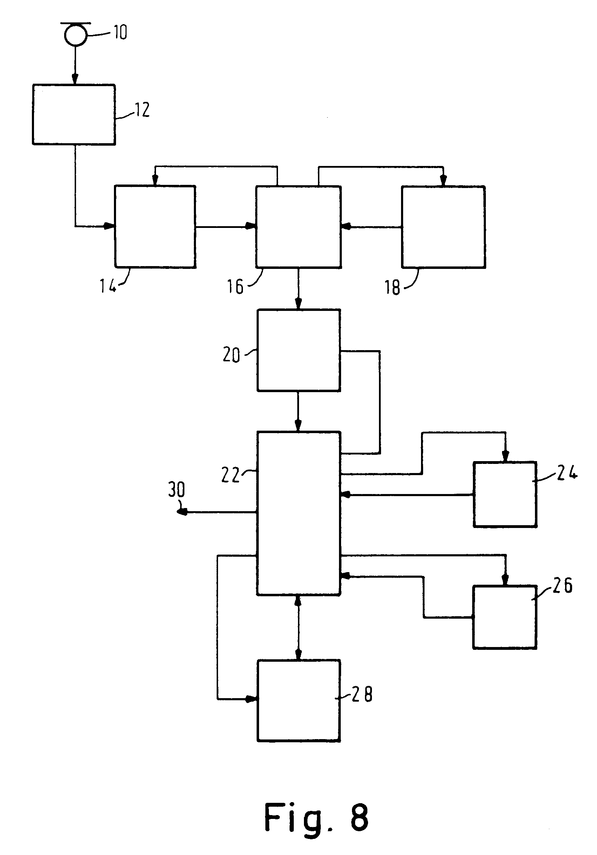

Bei dem in Fig. 8 dargestellten schematischen Blockschaltbild einer Anordnung zur Durchführung des beschriebenen Verfahrens wird im Block 12 das vom Mikrofon 10 gelieferte elektrische Sprachsignal verstärkt und in eine Folge digitaler Sprachwerte umgewandelt, die im Sprachwertspeicher 14 gespeichert werden. Ein Vergleichswertspeicher 18 enthält die Vergleichswerte der Wörter eines vorgegebenen Vokabulars.

Eine erste Verarbeitungsanordnung 16 adressiert die beiden Speicher 14 und 18 und ermittelt für jeweils einen momentanen Sprachwert und eine Folge von vergangenen Sprachwerten aus dem Sprachwertspeicher 14 anhand der Vergleichswerte aus dem Speicher 18 die Abstandssummen für die verschiedenen Folgen von Kombinationen von Sprachwerten und Vergleichswerten. Die Abstandssummen werden in einen ersten Speicher 20 eingeschrieben.

Nach der Ermittlung der Abstandssummen für jeweils eine Anzahl Folgen in allen Wörtern adressiert eine zweite Verarbeitungsanordnung 22 nacheinander alle Adressen eines ersten Speichers 24, der ein Sprachmodell bzw. ein Teil davon in Form der Zuordnungen jeweils eines Wortes zu mindestens einer syntaktischen Kategorie enthält. Für jeweils ein Wort werden die entsprechenden Abstandswerte zu den einzelnen Anfangspunkten aus dem ersten Speicher von der Verarbeitungsanordnung 22 ausgelesen und an den entsprechenden Speicherstellen eines zweiten Speichers 28 abgespeichert, wobei diese Speicherstelle durch die aus dem Sprachmodellspeicher 24 ausgelesene Kategorie, den momentanen Sprachwert aus dem Sprachwertspeicher 14 und den jeweiligen Anfangspunkt der Folge bestimmt ist. Das Einspeichern geschieht jedoch nur dann, wenn an der betreffenden Stelle kein kleinerer Abstandswert gespeichert ist. Ferner wird an jeder Speicherstelle außerdem die entsprechende Adresse des Sprachmodellspeichers 24 mit abgespeichert.

Nach der vollständigen Adressierung des Sprachmodellspeichers 24, bei dem der gesamte Inhalt des ersten Speichers 20 verarbeitet worden ist, kann die erste Verarbeitungsanordnung 16 den nächsten Sprachwert aus dem Speicher 14 übernehmen und verarbeiten, um den ersten Speicher 20 erneut zu füllen, und gleichzeitig kann die zweite Verarbeitungsanordnung 22 einen weiteren Sprachmodellspeicher 26 aufeinanderfolgend adressieren, der die Zuordnung einer syntaktischen Kategorie zu weiteren Kategorien enthält. Für jede Aufteilung werden von der zweiten Verarbeitungsanordnung 22 die entsprechenden Werte aus dem zweiten Speicher 28 bei verschiedenen Aufteilungsstellen ausgelesen und die Abstandssummen addiert und mit der Abstandssumme der aufgeteilten Kategorie verglichen. Wenn letztere größer ist, wird die Abstandssumme der Aufteilung sowie eine Angabe über diese Aufteilung und die Stelle der optimalen Aufteilung im zweiten Speicher 28 abgespeichert.

Nachdem am Ende des Sprachsignals alle Sprachwerte mittels der ersten Verarbeitungsanordnung 16 verarbeitet und die daraus entstandenen Abstandssummen über die zweite Verarbeitungsanordnung 22 verarbeitet worden sind, adressiert die zweite Verarbeitungsanordnung den zweiten Speicher 28 bei derjenigen Kategorie, die den ganzen gesprochenen Satz angibt, und zwar an der Stelle des letzten Sprachwertes und des ersten Anfangswertes (siehe Fig. 5). Aus der darin angegebenen Aufteilung wird über den Sprachmodellspeicher 26 ermittelt, in welche weiteren Kategorien die im zweiten Speicher 28 indirekt enthaltene optimale Folge von Wörtern aufgeteilt werden muß, und für jede so gefundene Kategorie wird die entsprechende Stelle im zweiten Speicher 28 adressiert, und aus der dabei gespeicherten Adresse des Sprachmodellspeichers 26 wird eine weitere Aufteilung der jeweiligen Kategorie ermittelt, bis eine Kategorie gefunden wird, die nur noch in bestimmte Wörter aufgeteilt wird. Diese Wörter geben schließlich in der entsprechenden Reihenfolge den Satz an, der das vom Mikrofon 10 empfangene Sprachsignal am besten wiedergibt, und diese Folge von Wörtern wird am Ausgang 30 abgegeben.

Die Verarbeitungsanordnungen 16 und 22 werden zweckmäßig durch einen Prozessor, gegebenenfalls durch einen entsprechend leistungsfähigen Mikroprozessor gebildet. Es ist auch möglich, beide Verarbeitungsanordnungen 16 und 22 durch einen einzigen Prozessor zu realisieren, wodurch die Verarbeitungsgeschwindigkeit dann jedoch reduziert wird.

**Patentansprüche**

1. Verfahren zur Erkennung eines aus zusammenhängend gesprochenen Wörtern abgeleiteten Sprachsignals, das aus einer zeitlichen Folge von Sprachwerten besteht, von denen jeder einen Abschnitt des Sprachsignals angibt, wobei die Sprachwerte mit vorgegebenen gespeicherten Vergleichswerten verglichen werden, von denen jeweils eine Gruppe von Vergleichswerten ein Wort eines vorgegebenen Vokabulars darstellt und die Vergleichsergebnisse über verschiedene Folgen von Kombinationen von Vergleichswerten und Sprachwerten zu je Folge einer Abstandssumme aufsummiert werden, dadurch gekennzeichnet, daß bei jedem neuen Sprachwert für jedes Wort die Abstandssumme von Folgen, die je Wort zu verschiedenen früheren Sprachwerten als Anfangspunkt beginnend das ganze Wort bis zum momentanen Sprachwert durchlaufen und bezogen auf den jeweiligen Anfangspunkt minimal sind, bestimmt und in einem ersten Speicher gespeichert wird, daß danach gemäß einer in einer ersten fest gespeicherten Liste enthaltenen Zuordnung der Wörter des Vokabulars zu je Wort mindestens einer syntaktischen Kategorie für jede Kategorie die kleinste Abstandssumme aller dieser Kategorie zugeordneten Wörter im ersten Speicher zusammen mit einer Angabe über die Zuordnung des diese kleinste Abstandssumme ergebenden Wortes in einem zweiten Speicher gespeichert wird, und daß danach gemäß einer zweiten fest gespeicherten Liste geprüft wird, ob und gegebenenfalls in welche zwei weiteren syntaktischen Kategorien jede Kategorie aufteilbar ist, und bei jedem Feststellen einer Aufteilbarkeit erneut für jeden Anfangspunkt bis zum frühesten Sprachsignal die für die eine der beiden weiteren Kategorien für den jeweiligen Anfangspunkt und einen Zwischenpunkt gespeicherte Abstandssumme und die für die andere der beiden weiteren Kategorien für den Zwischenpunkt und den momentanen Sprachwert gespeicherte Abstandssumme, wobei der Zwischenpunkt nacheinander an benachbarten Stellen zwischen Anfangspunkt und momentanem Sprachwert angenommen wird, zusammen addiert und die Summe mit der Abstandssumme der aufgeteilten Kategorie verglichen und, falls diese größer als die addierten Abstandssummen ist, an deren Stelle zusammen mit einer Angabe über die Aufteilung und den Zwischenpunkt, der die kleinste Summe ergeben hat, gespeichert wird, und daß nach Verarbeitung des letzten Sprachwertes aus der einen ganzen Satz angebenden Kategorie über die darin an der Speicherstelle für den ersten Sprachwert als Anfangspunkt angegebene Aufteilung in weitere Kategorien sowie über die an den jeweils weiteren Kategorien angegebenen Aufteilungen eine Folge von Wörtern als erkannte gesprochene Wörter bestimmt und ausgegeben wird.

2. Verfahren nach Anspruch 1, dadurch gekennzeichnet, daß zur Bestimmung der Abstandssummen die Anfangspunkte der Folgen höchstens die doppelte Länge des längsten Wortes des Vokabulars vom momentanen Sprachwert aus zurückliegen.

3. Anordnung zur Durchführung des Verfahrens nach Anspruch 1 oder 2, mit
   - einem Vergleichswertspeicher (18) für Vergleichswerte einer Anzahl Wörter,
   - einer Eingangsanordnung (10, 12) zum Erzeugen von elektrischen Sprachwerten aus einem akustischen Sprachsignal,
   - einer ersten Verarbeitungsanordnung (16) zum Vergleichen der Sprachsignale mit den Vergleichswerten und zum Erzeugen von Abstandssummen,

   dadurch gekennzeichnet, daß ein erster Speicher (20) vorgesehen ist, der bei jeweils einem Sprachwert die Abstandssummen je Wort für mehrere Folgen, die jeweils bei einem von einer Anzahl vorhergehender Sprachwerte beginnen, speichert und bei jedem folgenden Sprachwert überschrieben wird, daß ein zweiter Speicher (28) vorgesehen ist, der für jede syntaktische Kategorie je Sprachwert und je vorhergehendem Sprachwert eine Abstandssumme sowie die Adresse eines Sprachmodellspeichers (24, 26) enthält, der die Zuordnung der Wörter zu vorgegebenen syntaktischen Kategorien und deren Zuordnung untereinander enthält, daß eine zweite Verarbeitungsanordnung (22) vorgesehen ist, die für jedes Wort die syntaktische Kategorie aus dem Sprachmodellspeicher (24, 26) ausliest und die im ersten Speicher (20) für das betreffende Wort enthaltenen Abstandssummen zusammen mit einem Hinweis auf die entsprechende Adresse des Sprachmodellspeichers in den zweiten Speicher (28) an der der Kategorie, dem Sprachwert und dem vorhergehenden Sprachwert entsprechenden Speicherstelle einschreibt, sofern diese Speicherstelle eine größere Abstandssumme enthält, die danach aus dem Sprachmodellspeicher (24, 26) Zuordnungen einer syntaktischen Kategorie zu zwei weiteren Kategorien ausliest und die für diese weiteren Kategorien an verschiedenen Kombinationen von Sprachwert und vorhergehendem Sprachwert entsprechenden Speicherstellen des zweiten Speichers (28) ausliest und addiert und die minimale Summe der Abstandswerte der weiteren Kategorien an der Speicherstelle der ersteren Kategorie zusammen mit einer Angabe über die die minimale Summe ergebende Aufteilung und weiteren Angaben abspeichert und die nach Verarbeitung des letzten Sprachwerts ausgehend von der den ganzen Satz angebenden Kategorie, über die jeweils darin im zweiten Speicher (28) angegebenen weiteren Kategorien nacheinander eine Folge von Wörtern bestimmt und ausgibt.

4.    Anordnung nach Anspruch 3,
dadurch gekennzeichnet, daß mindestens eine der Verarbeitungsanordnungen durch einen Prozessor verwirklicht ist.

## Claims

1.    A method of recognizing a speech signal which is derived from coherently spoken words and consists of a temporal sequence of speech values, each of which indicates a section of the speech signal, the speech values being compared with given stored comparison values, a group of said comparison values each time representing a word of a given vocabulary and the comparison results being summed over different sequences of combinations of comparison values and speech values so as to form a distance sum per sequence, characterized in that for each new speech value for each word the distance sum of sequences which, for each word, beginning at different earlier speech values as a starting point, traverse the whole word as far as the instantaneous speech value and, related to the respective starting point, are a minimum, is determined and stored in a first memory, in that subsequently, in accordance an assignment of the words of the vocabulary, contained in a first permanently stored list, per word of at least one syntactical class for each class the smallest distance sum of all the words assigned to this class is stored in the first memory together with an indication about the assignment of the word yielding this smallest distance sum in a second memory, and in that subsequently, in accordance with a second permanently stored list, it is checked whether and into which two further syntactical classes each class can be subdivided and each time that a subdivisibility is ascertained again for each starting point as far as the earliest speech signal, the distance sum stored for the one of the two further classes for the respective starting point and an intermediate point and the distance sum stored for the other of the two further classes for the intermediate point and the instantaneous speech value, the intermediate point being assumed to lie successively at adjacent points between the starting point and the instantaneous speech value, are added and the sum is compared with the distance sum of the subdivided class and, if it is larger than the added distance sums, it is stored instead, together with an indication about the subdivision and the intermediate point which has yielded the smallest sum, and in that, after processing of the last speech value from the class indicating a whole sentence through the subdivision into further classes indicated therein at the storage location for the first speech value as the starting point and through the subdivisions indicated at the respective further classes, a sequence of words is determined and output as recognized spoken words.

2.    A method as claimed in Claim 1, characterized in that for determining the distance sums the starting points of the sequences are situated at the most twice the length of the longest word of the vocabulary back from the instantaneous speech value.

3.    An arrangement for carrying out the method claimed in Claim 1 or 2, comprising
   - a comparison value memory (18) for comparison values of a number of words,
   - an input circuit (10,12) for producing electrical speech values from an acoustic speech signal,
   - a first processing circuit (16) for comparing the speech signals with the comparison values and for producing distance sums,
   
   characterized in that a first memory (20) is provided which, each time at a speech value, stores the distance sums per word for several sequences which each time begin at one of a number of preceding speech values, and is overwritten at each following speech value, in that a second memory (28) is provided which, for each syntactical class per speech value and per preceding speech value, contains a distance sum as well as the address of a speech model memory (24,26), which contains the assignment of the words to given syntactical classes and their mutual assignment, in that a second processing circuit (22) is provided which, for each word, reads the syntactical class from the speech model memory (24,26) and writes the distance sums contained in the first memory (20) for the relevant word together with a reference to the corresponding address of the speech model memory into the second memory (28) at the storage location corresponding to the class, to the speech value and to the preceding speech value, as far as said storage location contains a larger distance sum, and then reads from the speech model memory (24,26) assignments of a syntactical class to two further classes and which for said further classes reads and adds at storage locations of the second memory (28) corresponding to different combinations of speech value and preceding speech value and stores the minimum sum of the distance values of the further classes at the storage location of the first class, together with an indication about the subdivision yielding the minimum sum and with further indications, and which, after processing of the last speech value, starting from the class indicating the whole sentence, determines and supplies successively a sequence of words through the further classes each time indicated therein in the second memory (28).

4. An arrangement as claimed in Claim 3, characterized in that at least one of the processing circuits is realized by a processor.

## Revendications

1. Procédé pour la reconnaissance d'un signal vocal découlant de mots enchaînés, lequel signal est constitué d'une séquence temporelle de valeurs vocales qui désignent chacune un segment du signal vocal, les valeurs vocales étant comparées à des valeurs de comparaison mémorisées prédéfinies parmi lesquelles, respectivement, un groupe de valeurs de comparaison représente un mot d'un vocabulaire prédéfini et les résultats des comparaisons sur différentes séquences de combinaisons de valeurs de comparaison et de valeurs vocales sont additionnés à une somme d'écarts par séquence, caractérisé en ce qu'à chaque nouvelle valeur vocale pour chaque mot, la somme d'écarts des séquences qui, à chaque mot, parcourent tout le mot jusqu'à la valeur vocale instantanée en prenant comme point de départ différentes valeurs vocales antérieures et sont minimales par rapport au point de départ respectif, est déterminée et mémorisée dans une première mémoire, qu'ensuite, conformément à une affectation des mots du vocabulaire à chaque mot d'au moins une catégorie syntaxique, affectation contenue dans une première liste stockée en mémoire morte, pour chaque catégorie, la plus petite somme des écarts de tous les mots affectés à cette catégorie dans la première mémoire est mémorisée conjointement avec une indication de l'affectation du mot donnant cette plus petite somme d'écarts dans une deuxième mémoire, qu'ensuite, conformément à une deuxième liste stockée en mémoire morte, il est vérifié si chaque catégorie peut être scindée et, le cas échéant, en quelles deux sous-catégories syntaxiques et, à chaque détermination d'une subdivision, pour chaque point de départ jusqu'au signal de parole le plus récent, la somme d'écarts stockée pour l'une des deux sous-catégories pour le point de départ respectif et un point intermédiaire et la somme d'écarts stockée pour l'autre des deux sous-catégories pour le point intermédiaire et la valeur vocale instantanée, étant entendu que le point intermédiaire est successivement choisi en des endroits voisins entre le point de départ et la valeur vocale instantanée, sont additionnées et la somme est comparée avec la somme d'écarts de la catégorie subdivisée et, si la première est plus grande que les sommes d'écarts additionnées, elle est stockée à leur place conjointement avec une indication de la subdivision et du point intermédiaire qui a donné la plus petite somme et qu'après le traitement de la dernière valeur vocale d'une catégorie formant toute une phrase par la subdivision en sous-catégories indiquée comme point de départ pour la première valeur vocale dans la mémoire ainsi que par les subdivisions indiquées respectivement aux sous-catégories respectives, une séquence de mots est déterminée et sortie sous forme de mots prononcés reconnus.

2. Procédé selon la revendication 1, caractérisé en ce que, pour la détermination des sommes d'écarts, les points de départ des séquences reviennent au maximum au double de la longueur du mot le plus long du vocabulaire à partir de la valeur vocale instantanée.

3. Dispositif pour l'exécution du procédé selon la revendication 1 ou 2 avec :

- une mémoire de valeurs de comparaison (18) pour les valeurs de comparaison d'un nombre de mots;
- un dispositif d'entrée (10, 12) pour la production de valeurs vocales électriques à partir d'un signal vocal acoustique, et
- un premier dispositif de traitement (16) pour la comparaison des signaux vocaux avec les valeurs de comparaison et pour la production de sommes d'écarts,

caractérisé en ce que :

une première mémoire (20) est prévue qui mémorise, pour chaque fois une valeur vocale, les sommes d'écarts par mot pour plusieurs séquences qui commencent respectivement par l'une d'un certain nombre de valeurs vocales précédentes, et est écrasée à chaque valeur vocale suivante;

une deuxième mémoire (28) est prévue qui contient pour chaque catégorie syntaxique, par valeur vocale et par valeur vocale précédente, une somme d'écarts ainsi que l'adresse d'une mémoire de modèle vocal (24,26) qui contient l'affectation des mots à des catégories syntaxiques prédéterminées et leurs affectations mutuelles;

un deuxième dispositif de traitement (22) est prévu qui puise, pour chaque mot, la catégorie syntaxique de la mémoire de modèle vocal (24, 26) et qui enregistre les sommes d'écarts contenues dans la première mémoire (20) pour le mot en question conjointement avec une indication de l'adresse correspondante de la mémoire de modèle vocal dans la deuxième mémoire (28) à l'endroit de stockage correspondant à la catégorie, à la valeur vocale et à la valeur vocale précédente à condition que cet endroit de stockage contienne une somme d'écarts plus grande qui puise ensuite de la mémoire de modèle vocal (24,26) des affectations d'une catégorie syntaxique en deux sous-catégories et puise et additionne les endroits de stockage de la deuxième mémoire (28) correspondant pour ces deux sous-catégories à différentes combinaisons de valeur vocale et de valeur vocale précédente et stocke la somme minimale des valeurs d'écarts des sous-catégories dans l'endroit de stockage de la première catégorie conjointement avec une indication de la subdivision donnant la somme minimale d'autres indications et qui, après traitement de la dernière valeur vocale à partir de la catégorie indiquant la phrase complète, via les sous-catégories indiquées respectivement dans la deuxième mémoire (28), détermine et émet successivement une séquence de mots.

**4.** Dispositif selon la revendication 3, caractérisé en ce qu'au moins un des dispositifs de traitement est réalisé par un processeur.

INITIALIZE: $S(j,i|U)$ = infinite

FOR $i = 1,(+1),I$   DO

FOR   EACH WORD   u   DO

$D(j,i|u)$, $i-2J<j<i$:backward time alignment

FOR   $j = i-1,(-1),Max(0,i-2J)$   DO

FOR   $q = 1,(+1),Q$   DO

$(U,u) = (U \rightarrow u)(q)$

IF $D(j,i|u)<S(j,i|U)$
          THEN   $S(j,i|U)=D(j,i|u)$
                 $B(j,i|U)=q$
                 $F(j,i|U)=0$

FOR $j = i-1,(-1),0$   DO

FOR   $r = 1,(+1),R$   DO

$(U,V,W) = (U \rightarrow VW(r)$

FOR   $l =j+1,(+1),i-1$   DO

$X = S(j,l|V) + S(l,i|W)$

IF   $X<S(j,i|U)$   THEN $S(j,i|U)=X$
                        $B(j,i|U)=r$
                        $F(j,i|U)=1$

# Fig.1

Fig.2

Fig.3

Fig.4

Fig.6

Fig.5

Fig.7

Fig. 8